# EUROPEAN PATENT SPECIFICATION

(11) **EP 2 777 112 B1**
(45) Date of publication and mention of the grant of the patent: **03.02.2016**
(21) Application number: 12799324.4
(22) Date of filing: 05.11.2012
(51) Int. Cl.: H02G 1/12

(54) **ELECTRIC WIRE PROCESSING DEVICE AND METHOD FOR PROCESSING ELECTRIC WIRE**
VORRICHTUNG ZUR BEARBEITUNG VON ELEKTRODRÄHTEN UND VERFAHREN ZUR BEARBEITUNG VON ELEKTRODRÄHTEN
DISPOSITIF DE TRAITEMENT DE FIL ÉLECTRIQUE ET PROCÉDÉ DE TRAITEMENT DE FIL ÉLECTRIQUE

(30) Priority: 07.11.2011 JP 2011243156
(43) Date of publication of application: 17.09.2014
(73) Proprietor: Yazaki Corporation, Minato-ku Tokyo 108-8333 (JP)
(72) Inventor: ARAKI, Mamoru, Makinohara-shi Shizuoka 421-0407 (JP); TAKAHASHI, Katsunori, Makinohara-shi Shizuoka 421-0407 (JP)
(74) Representative: Grünecker Patent- und Rechtsanwälte PartG mbB
(86) International application number: PCT/JP2012/007070
(87) International publication number: WO 2013/069247

(56) References cited:
- EP-A2- 0 499 753
- EP-A2- 1 258 960

## Description

### Technical Field

The present invention relates to an electric wire processing device and a method for processing electric wire arranged to strip off an insulating cover at a longitudinal end or a central portion of an electric wire.

### Background Art

Conventionally, there is an electric wire processing device (a stripping device) arranged to strip off an insulating cover at a longitudinal end of a covered electric wire having a core wire insulated with the insulating cover for connecting the core wire with a terminal clamp and such (refer to Patent Literature 1 for example). Such electric wire processing device is arranged to hold the electric wire transmitted in the longitudinal direction at a predetermined position using a clamp, make an incision in a circumferential direction of the insulating cover using a pair of cutters which sandwiches the longitudinal end of the electric wire from both sides, and strip off the insulating cover by sliding the cutters toward the longitudinal end of the electric wire. An electric wire processing device is also disclosed in EP 0 439 753 A2.

Meanwhile, there is another electric wire processing device (a cover stripping equipment) arranged to make an incision in an insulating cover along a longitudinal direction of an electric wire to strip off the insulating cover (for example, refer to Patent Literature 2). This processing device is arranged to insert a guide chip between a core wire of the electric wire and the insulating cover and cut the insulating cover using a cutting blade provided adjacent to the guide chip.

### Citation List

### Patent Literature

PTL 1: Japan Patent Application Publication No. H10-12350
PTL 2: Japan Patent Application Publication No. H11-187530

### Summary of Invention

### Technical Problem

However, for the above-described electric wire processing device disclosed in Patent Literature 1, the insulating cover which has the incision formed in the circumferential direction is pulled away from the core wire by sliding the cutters. Thus, in the case of a thick electric wire or a shield electric wire or the like, or if the length of the insulating cover to be removed is long, then a high friction resistance with respect to the core wire is applied, causing it difficult to pull away the insulating cover. Furthermore, since the cutters used to make the incision is slid along the core wire, blades of the cutters may scrape against the core wire, causing damage to the core wire.

Moreover, for the electric wire processing device disclosed in Patent Literature 1, the pair of cutters is moved closer to each other and sandwiches the electric wire to make the incision in the circumferential direction of the insulating cover. Thus, the amount of movement of the cutters (i.e. an incision depth) must be adjusted accurately. That is, if the incision depth is too deep, then the core wire may be damaged, and if the incision depth is too shallow, then there are problems such as difficulty in pulling away of the insulating cover and rough cutting surface. Furthermore, due to a dimension error in each electric wire, there is required high-level and complicated adjustment work for adjusting the amount of movement of the cutter, causing a decrease in the work efficiency and the efficiency of manufacturing of electric wire.

Meanwhile, in the case of using the above-described electric wire processing device disclosed in Patent Literature 2, there is a need to make the incision in the circumferential direction for trimming the cutting surface when removing the insulating cover cut by the cutting blade. In this case, if the cutter disclosed in Patent Literature 1 is used to make the incision along the circumferential direction, as with the above-described problems the adjustment work for adjusting the amount of movement of the cutter becomes complicated, possibly causing a decrease in the work efficiency and the manufacturing efficiency. The electric wire may be an unshielded electric wire having one or more core wires covered with an insulating cover, or may be a shielded electric wire having one or more core wires covered with a shield braid and an insulating cover. In the case of using the shielded electric wire, there are concerns about damage to the core wire and damage to the shield braid.

In view of the above-described problem, an object of the present invention is to provide an electric wire processing device and a method for processing electric wire which eliminates a need of the complicated adjustment work and improves the efficiency of manufacturing of electric wire, which can prevent the damage to a core wire and a shield braid, and which can smoothly trim a cutting surface of an insulating cover.

### Solution to Problem

The present invention provides, in a first aspect, an electric wire processing device for cutting an insulating cover along a circumferential direction to strip off the insulating cover, the insulating cover having an incision formed along a longitudinal direction of an electric wire, the electric wire processing device including a pair of incising cutters arranged to move closer to each other and away from each other along a direction intersecting with the longitudinal direction of the electric wire and arranged to cut into the insulating cover along the circumferential direction of the insulating cover, wherein the pair of incising cutters includes abutting portions arranged to abut each other when moved closer to each other, and blade portions formed depressed from the abutting portions along the circumferential direction of the insulating cover, and wherein the blade portion of one incising cutter of the incising cutters includes a linear portion extending linearly toward the abutting portions of the other incising cutter of the incising cutters.

According to the above-described structure, the blade portions are arranged to cut into the insulating cover along the circumferential direction of the insulating cover such that the linear portion formed in the one blade portion intersects with the incision in the electric wire. Thus, the insulating cover can be cut easily along the blade portion starting from this intersection. In such case, since the one blade portion includes the linear portion, the cutting of the insulating cover can be started by pushing an edge of the incision against the linear portion. Consequently, the start point of the cutting is prevented from being distant from the blade portion that would otherwise cause the tear, and thus the cutting can be started stably from the intersection of the linear portion and the incision, and subsequently the insulating cover can be cut along the blade portion. Furthermore, the insulating cover can be cut easily by moving the incision cutters closer to each other as described above without completely cutting the insulating cover. Thus, there is no need for high-accuracy adjustment of the cut-in depth of the blade portion, instead the cut-in depth can be set arbitrarily so as to prevent the contact with the core wire and the shield braid.

The present invention provides, in a second aspect, the electric wire processing device according to the first aspect further including a pair of electric wire clamps arranged adjacent to each of the pair of incising cutters to hold the electric wire, wherein one electric wire clamp of the pair of electric wire clamps adjacent to the one incising cutter includes a concave holding recess arranged to receive the electric wire, and the other electric wire clamp of the pair of electric wire clamps includes a pushing portion arranged to push the electric wire to inside of the holding recess.

According to the above-described structure, the one electric wire clamp adjacent to the one incising cutter is provided with the holding recess. Thus, by disposing and holding the electric wire in the holding recess, the incision in the electric wire can be positioned so as to intersect with the linear portion of the blade portion in a reliable manner. Furthermore, by pushing the electric wire to inside of the holding recess using the pushing portion of the other electric wire clamp, the positioning of the linear portion and the incision in the electric wire can be achieved in a reliable manner.

The present invention provides, in a third aspect, a method for cutting an insulating cover along a circumferential direction to strip off the insulating cover, the insulating cover having an incision formed along a longitudinal direction of an electric wire, the method including, providing a pair of incising cutters arranged to move closer to and away from each other along a direction intersecting with the longitudinal direction of the electric wire and arranged to cut into the insulating cover along the circumferential direction of the insulating cover, moving the pair of incising cutters closer to each other to abut each other and making blade portions which are formed depressed with respect to each other cut into the insulating cover along the circumferential direction of the insulating cover, and stripping the insulating cover by sequentially cutting the insulating cover along the blade portions starting from an intersection of the incision and a linear portion which is formed in the blade portion of the one incising cutter and extending beyond the incision toward the other incising cutter.

According to the above-described structure, as with the above-described electric wire processing device, the insulating cover can be stripped off while preventing the cutter blade contacting the core wire and the shield braid, and the insulating cover can be cut from the intersection of the linear portion and the incision in the electric wire in a reliable manner.

The present invention provides, in a forth aspect, the method for cutting an insulating cover according to the third aspect, wherein the cutting of the insulating cover starts from cutting toward the blade portion of the one incising cutter, followed by sequentially cutting the insulating cover along the circumferential direction.

According to the above-described structure, by cutting the insulating cover toward the one blade portion having the linear portion, the cutting can be performed stably by the one blade portion continued from the linear portion, and the cutting surface can be prevented from being rough surface.

### Advantageous Effects of Invention

According to the first aspect of the present invention, the insulating cover can be stripped off without allowing the cutter blade to contact with the core wire and the shield braid, thereby reliably preventing the damage to the core wire and the shield braid. Furthermore, there is no need for an accurate adjustment of the amount of approach movement of the pair of cutters, instead it only requires a simple adjustment work, thereby preventing a decrease in the work efficiency and improving the efficiency of manufacturing of electric wire. Moreover, the cutting of the insulating cover can be started from the intersection of the linear portion of the one blade portion and the incision in the electric wire, thus the insulating cover can be cut easily and smoothly and the cutting surface can be trimmed smoothly.

According to the second aspect of the present invention, the electric wire can be positioned at a predetermined position inside of the holding recess so that the cutting of the insulating cover can be started with the incision in the electric wire intersecting reliably with the linear portion of the blade portion.

According to the third aspect of the present invention, as described above, the damage to the shield braid or to the core wire of the electric wire can be prevented in a reliable manner, and the adjustment work for adjusting the amount of movement of the cutter can be simplified, thereby improving the efficiency of manufacturing of electric wire. Furthermore, the insulating cover can be cut easily and smoothly and the cutting surface can be trimmed smoothly. Thus, the smoothly trimmed cutting surface can improve the work efficiency for connecting a terminal clamp in the subsequent process.

According to the forth aspect of the present invention, the insulating cover can be cut easily and stably, and the cutting surface can be trimmed even more smoothly.

### Brief Description of Drawings

[fig.1]Fig. 1 is a perspective view of an electric wire processing device according to one embodiment of the present invention;
[fig. 2] Fig. 2 is a front view showing an operation of the electric wire processing device;
[fig.3]Fig. 3 is a front view showing an operation of the electric wire processing device;
[fig.4]Fig. 4 is an enlarged perspective view of a portion of the electric wire processing device;
[fig.5]Fig. 5 is a further enlarged front view of a portion of the electric wire processing device;
[fig.6]Fig. 6 shows a procedure for processing an electric wire using the electric wire processing device;
[fig.7]Fig. 7 shows the procedure for processing the electric wire following Fig. 6;
[fig.8]Fig. 8 shows the procedure for processing the electric wire following Fig. 7; and
[fig.9]Fig. 9 shows the procedure for processing the electric wire following Fig. 8.

### Description of Embodiments

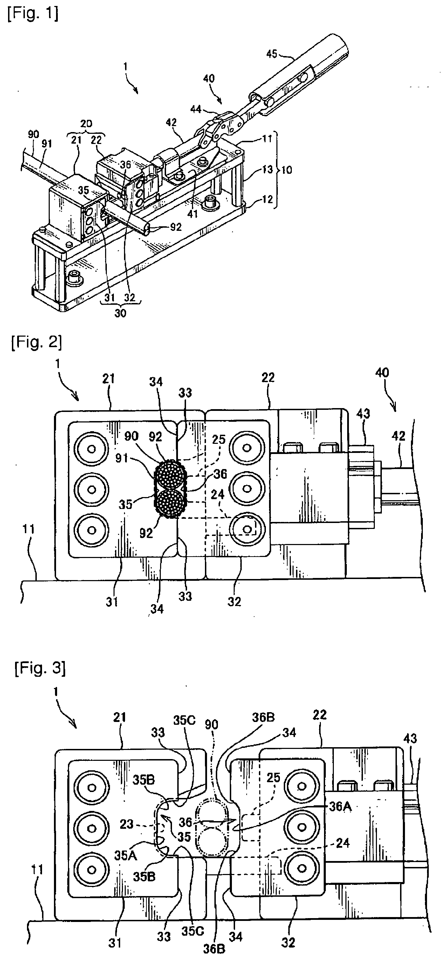

In the following, an electric wire processing device according to one embodiment of the present invention is explained in reference to Figs. 1 through 9. An electric wire processing device 1 according to this embodiment is arranged to cut an insulating cover 91 at a longitudinal end of an electric wire 90 along a circumferential direction to strip off the insulating cover 91. An incision C is made in advance in the insulating cover 91 of the electric wire 90 along a longitudinal direction of a portion to be stripped. The electric wire 90 includes two core wires 92 made of twisted wires or a single wire, and these two core wires 92 are arranged in parallel with respect to each other along the longitudinal direction. A braid 93 and the insulating cover 91 are arranged so as to cover a circumference of the core wires 92. In other words, the electric wire 90 is formed to have a substantially oval or ellipsoidal overall cross-section formed with two parallelly-extending core wires 92 covered with the braid 93 and the insulating cover 91. In this embodiment, the electric wire 90 which is a shielded electric wire having the braid 93 is illustrated by an example; however, the electric wire 90 may be an unshielded electric wire without the braid 93.

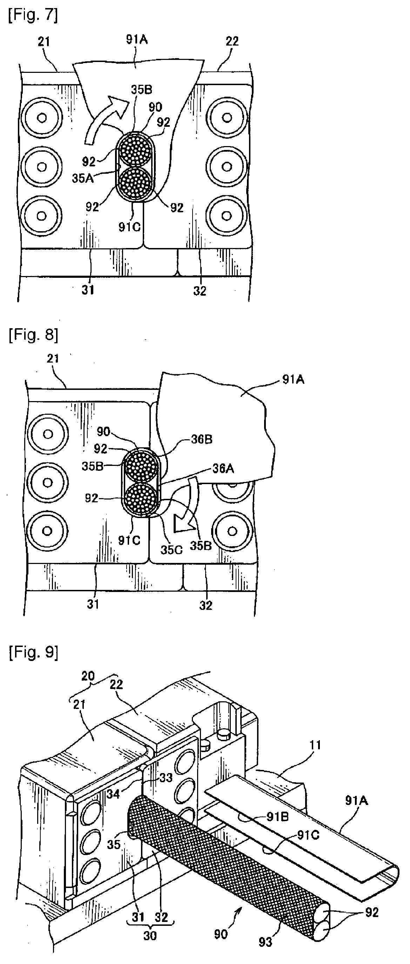

Furthermore, the incision C which penetrates the insulating cover 91 is formed at a top portion on one side (i.e. a lower side in the drawing) in an opposed direction of the two core wires 92 on the circumferential direction of the electric wire 90. This incision C is formed using another processing device not shown and is formed continuously for a predetermined length from an end of the electric wire 90 such that the insulating cover 91 within the range formed by the incision C is stripped as a removal portion 91A (refer to Fig. 9, for example).

The electric wire processing device 1 includes a base member 10 having a pair of upper base plate and lower base plate 11, 12 attached together via posts 13 located at four corners, a pair of electric wire clamps 20 supported on an upper face of the upper base plate 11, a pair of incising cutters 30 fixed to the respective electric wire clamps 20, and an operation unit 40 arranged to relatively move the pair of electric wire clamps 20 in a direction closer to each other and away from each other.

For the base member 10, the lower base plate 12 is fixed to a mount plate or the like not shown using a plurality of anchor bolts, and the upper and lower base plates 11, 12 are attached together by the posts 13 so as to inhibit the entire movement.

The pair of electric wire clamps 20 includes a fixed-side clamp (one electric wire clamp) 21 fixed to the upper base plate 11 at opposite side of the operation unit 40 and a moving-side clamp (the other electric wire clamp) 22 movably supported at the upper base plate 11 so as to face the fixed-side clamp 21. The moving-side clamp 22 is arranged to move closer to and away from the fixed-side clamp 21 by the operation unit 40, that is, the fixed-side clamp 21 and the moving-side clamp 22 are arranged to move closer to each other and away from each other.

The fixed-side clamp 21 is fixed to the upper base plate 11 by an angle bar located on a back side of the fixed-side clamp 21, for example. On a front side of the fixed-side clamp 21 which faces the moving-side clamp 22, there are provided a concave holding recess 23 for receiving the electric wire 90 and an extending portion 24 formed continuously from a bottom face of the holding recess 23 and extending toward the other side (i.e. toward the moving-side clamp 22). The moving-side clamp 22 includes the operation unit 40 attached to a back side of the moving-side clamp 22 and a pushing portion 25 provided to a front side of the moving-side clamp 22 facing the fixed-side clamp 21, the pushing portion 25 being located opposite of the holding recess 23 to push the electric wire 90 to inside of the holding recess 23.

The pair of incising cutters 30 includes a first cutter 31 corresponding to one incising cutter fixed to the fixed-side clamp 21 and a second cutter 32 corresponding to the other incising cutter fixed to the moving-side clamp 22. The first cutter 31 and the second cutter 32 are arranged to move closer to each other and away from each other along with the movement of the fixed-side clamp 21 and the moving-side clamp 22.

The first cutter 31 and the second cutter 32 include upper-and-lower abutting portions 33, 34 which abut each other when moved closer to each other and concave blade portions 35, 36 depressed from the respective abutting portions 33, 34 to receive the electric wire 90, respectively. The blade portions 35, 36 have inner circumference shaped to cut into the insulating cover 91 along the circumferential direction of the insulating cover 91 when the electric wire 90 is received. In such manner, by allowing the blade portions 35, 36 to cut into the insulating cover 91, the insulating cover 91 can be cut along the blade portions 35, 36, in a manner as described later.

As shown in Figs. 3-5, the blade portion 35 of the first cutter 31 includes a vertically extending vertical portion 35A formed at a bottom portion of the depressed shape which is most depressed with respect to the abutting portions 33, a pair of arcuate portions 35B formed continuously above and below this vertical portion 35A and formed into a substantially quadrant arch, and a pair of linear portions 35 extending horizontally toward the second cutter 32 from a tip end of each arcuate portion 35B such that ends of the pair of linear portions 35C located on the side of the second cutter 32 are formed continuously from the abutting portions 33. In addition, the blade portion 35 has a sharpened edge and has an inner diameter slightly smaller than the inner diameter of the holding recess 23 of the fixed-side clamp 21 so as to allow the front edge of the blade portion 35 to cut into the insulating cover 91.

The blade portion 36 of the second cutter 32 includes a vertically-extending vertical portion 36A formed at a bottom portion of the depressed shape which is most depressed with respect to the abutting portions 34 and a pair of arcuate portions 36B formed continuously above and below this vertical portion 36A and formed smaller than a substantially quadrant arch such that ends of the pair of arcuate portions 36B located on the side of the first cutter 31 are formed continuously from the upper-and-lower abutting portions 34. In other words, the blade portion 36 is formed into a depression having a depth shallower compared to the depth of the blade portion 35 and has a sharpened front edge so as to cut into the insulating cover 91.

For the first cutter 31 and the second cutter 32 described above, in a state in which the abutting portions 33, 34 of the first cutter 31 and the second cutter 32 are abutting each other and the closed blade portions 35, 36 are cutting into the circumference of the electric wire 90, the abutting portions 33 of the first cutter 31 are eccentrically-located toward the second cutter 32 (toward the other side) with respect to a center of the electric wire 90, as shown in Figs. 2, 4 and 5. Thus, the incision C formed in the insulating cover 91 of the electric wire 90 and the lower linear portion 35C of the first cutter 31 intersect each other.

The operation unit 40 includes a support portion 41 fixed to the upper face of the upper base plate 11, a rod 42 supported on the support portion 41 so as to move in right-left and front-back directions, an attachment portion 43 for attaching one end of the rod 42 to the moving-side clamp 22, a toggle portion 44 rotatably attached to the other end of the rod 42 and to the support portion 41, and an operation lever 45 attached to the toggle portion 44. As shown in Fig. 1, this operation unit 40 operates the operation lever 45 to rotatably move in a direction away from the electric wire clamps 20 to move the moving-side clamp 22 away from the fixed-side clamp 21, and operates the operation lever 45 to rotatably move toward the electric wire clamps 20 to move the rod 42 forward via the toggle portion 44 to move the moving-side clamp 22 closer to the fixed-side clamp 21via the rod 42 and the attachment portion 43.

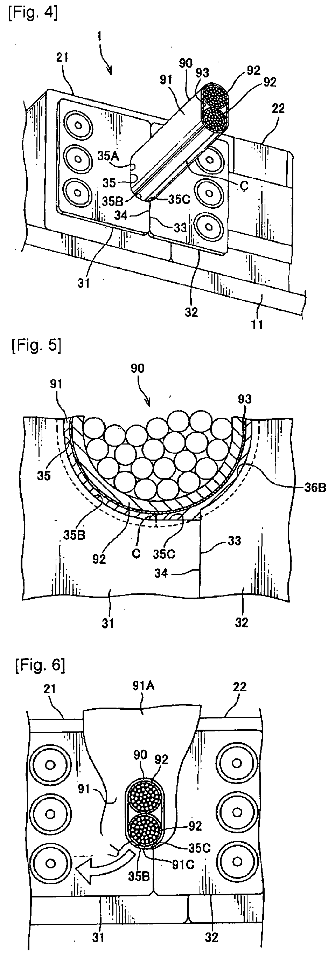

In the following, a method for processing electric wire using the above-described electric wire processing device 1 is explained with reference to Figs. 6 through 9. Firstly, the operation lever 45 of the operation unit 40 is positioned on a side distant from the electric wire clamp 22 so that the moving-side clamp 22 and the second cutter 32 are located distant from the fixed-side clamp 21 and the first cutter 31, as shown in Fig. 1 which corresponds to a standby state. In this standby state, the electric wire 90 is inserted between the fixed-side clamp 21 and the first cutter 31 and the moving-side clamp 22 and the second cutter 32, as shown in Fig. 3, so that the electric wire 90 is pushed into the holding recess 23 along the extending portion 24 of the fixed-side clamp 21 and held in the holding recess 23.

Next, the operation lever 45 is operated to rotatably move toward the electric wire clamps 20 to move the moving-side clamp 22 closer to the fixed-side clamp 21 via the rod 42 and the attachment portion 43. By doing so, as shown in Figs. 2, 4 and 5, the pushing portion 25 of the moving-side clamp 22 firmly pushes the electric wire 90 into the holding recess 23 of the fixed-side clamp 21 while receiving the electric wire 90 inside of the blade portions 35, 36 of the first cutter 31 and the second cutter 32. In this holding state in which the fixed-side clamp 21 and the moving-side clamp 22 are moved closer to hold the electric wire 90, and the abutting portions 33, 34 of the first cutter 31 and the second cutter 32 are abutted each other, the blade portions 35, 36 cut into the circumference of the insulating cover 91 such that the incision C of the insulating cover 91 intersect with the linear portion 35C of the first cutter 31. Here, the blade portions 35, 36 which cut into the insulating cover 91 do not penetrate through the insulating cover 91, that is, the first cutter 31 and the second cutter 32 are aligned such that the blade portions 35, 36 do not reach to the braid 93.

In the holding state mentioned above, a worker inserts his finger or a tool into the incision C and pulls a one edge 91B of the insulating cover 91 toward a side of the blade portion 35 of the first cutter 31, thereby cutting the insulating cover 91 along the lower arcuate portion 35B, as shown in Fig. 6. Then, as shown in Fig. 7, the finger or the tool is inserted between the insulating cover 91 and the core wire 92, and the insulating cover 91 is pulled upward from the left side in the drawing, thereby extending the cut portion along the linear portion 35A of the blade portion 35 and the upper arcuate portion 35B.

Next, as shown in Fig. 8, the insulating cover 91 is pulled downward from the right side in the drawing, is continuously cut along the upper arcuate portion 36B and the linear portion 36A of the blade portion 36, and is then cut along the lower arcuate portion 36B to the linear portion 35C of the blade portion 35, thereby cutting the insulating cover 91 continuously all the way around to the other edge 91C. In this way, the removal portion 91A of the insulating cover 91 is cut and stripped off along the circumferential direction, and the core wire 92 and the braid 93 at the end of the electric wire 90 are exposed, as shown in Fig. 9.

After removing the removal portion 91 of the insulating cover 91 at the end of the electric wire 90 in the way described above, the operation lever 45 of the operation unit 40 is rotatably moved away from the electric wire clamps 20 to move the moving-side clamp 22 away from the fixed-side clamp 21 and to move the second cutter 32 away from the first cutter 31. Then, the processed electric wire 90 in which the core wire 92 and the braid 93 at the end are exposed is removed out of the electric wire processing device 1 to complete the process.

According to this embodiment, by making the blade portions 35, 36 cut into the insulating cover 91 along the circumferential direction of the insulating cover 91 while the electric wire 90 is being held in the electric wire processing device 1, and by cutting the insulating cover 91 toward the blade portion 35 with a start point of the cutting being the intersection of the linear portion 35C of the first cutter 31 and the incision C, the removal portion 91A of the insulating cover 91 can be stripped off without allowing the blade portions 35, 36 contacting the core wire 92 and the braid 93. Furthermore, the insulating cover 91 can be prevented from being torn off due to the start point of the cutting being distant from the blade portion 35, and the cutting can be started stably from the intersection of the linear portion 35C and the longitudinal incision C, and the cutting can be performed along the blade portions 35, 36, thereby achieving the cutting surface to be trimmed smoothly. Therefore, the core wire 92 and the braid 93 can be prevented from being damaged, the adjustment of the cut-in depth of the first cutter 31 and the second cutter 32 in the insulating cover 91 can be simplified, and a decrease in the work efficiency can be prevented and the efficiency of processing of the electric wire 90 can be improved.

Furthermore, by guiding the electric wire 90 along the extending portion 24 of the fixed-side clamp 21and pushing the electric wire 90 into the holding recess 23 along with firmly pushing and holding the electric wire 90 in the holding recess 23 using the pushing portion 25 of the moving-side clamp 22, the longitudinal incision C can be positioned with respect to the linear portion 35C of the blade portion 35 in a reliable manner. Furthermore, the displacement of the electric wire 90 can be prevented during the cutting in the circumferential direction along the blade portions 35, 36, thus the cutting surface of the insulating cover 91 can be trimmed smoothly when stripping the removal portion 91A.

In addition, the above-described embodiment shows the electric wire processing unit 1 for stripping the insulating cover 91 of the electric wire 90 having two core wires 92; however, an electric wire intended for the electric wire processing device of the present invention is not limited to the above-described embodiment and an electric wire may have a single core wire or may have three or more core wires. In this case, a blade portion of an incising cutter may be formed into a suitable shape in accordance with the cross-sectional shape of the electric wire, as well as the shape of the electric wire clamp can be changed in a suitable manner.

Furthermore, the above-described embodiment illustrates by an example the case of stripping the insulating cover 91 at the end of the electric wire 90. However, it is possible to strip off an insulating cover at a central portion of an electric wire using the electric wire processing device of the present invention. In other words, when an incision C made along the longitudinal direction is formed for a predetermined length range at the central portion of the electric wire, the insulating cover can be cut along the circumferential direction at both ends of this incision in a manner similar to the above-described embodiment, and the insulating cover between the both ends can be stripped off.

Furthermore, the above-described embodiment shows the case in which a worker performs by a manual operation the process of the setting of the electric wire 90 between the pair of electric wire clamps 20 and between the pair of incising cutters 30, the operation of the operation unit 40 for moving the moving-side clamp 22 and the first cutter 31 in a direction closer to and away from each other, and the stripping of the insulating cover 91 in the holding state of the electric wire 90. However, the electric wire processing device of the present invention may include a drive unit which automatically performs each process.

Furthermore, in the above-described embodiment, the incision C formed along the longitudinal direction of the electric wire 90 is formed in the insulating cover 91 in advance, and the insulating cover 91 is cut along the circumferential direction of the electric wire 90. However, the electric wire processing device according to the present invention may successively perform the formation of the longitudinal incision and the cutting of the insulating cover.

An electric wire processing device and a method for processing electric wire according to the present invention may be utilized as a stripping device or a stripping method arranged to strip off the insulating cover located at the longitudinal end or at the central portion of various electric wires.

### Reference Signs List

- 1: electric wire processing device
- 20: electric wire clamp
- 21: fixed-side clamp
- 22: moving-side clamp
- 23: holding recess
- 24: extending portion
- 25: pushing portion
- 30: incising cutter
- 31: first cutter (one incising cutter)
- 32: second cutter (the other incising cutter)
- 33, 34: abutting portion
- 35, 36: blade portion
- 35C: linear portion
- 90: electric wire
- 91: insulating cover
- C: incision

## Claims

1. An electric wire processing device (1) adapted for cutting an insulating cover (91) of an electric wire (90) along a circumferential direction to strip off the insulating cover (91), the insulating cover (91) having an incision (C) formed along a longitudinal direction of the electric wire (90),
the electric wire processing device (1) comprising a pair of incising cutters (30) arranged to move closer to each other and away from each other along a direction intersecting with the longitudinal direction of the electric wire (90) and arranged to cut into the insulating cover (91) along the circumferential direction of the insulating cover (91),
wherein the pair of incising cutters (30) includes abutting portions (33,34) arranged to abut each other when moved closer to each other, and a pair of blade portions (35,36) formed depressed from the abutting portions (33,34) along the circumferential direction of the insulating cover (91), and
wherein one blade portion (35) of the pair of blade portions (35,36) includes a linear portion (35C) extending linearly toward the abutting portions (34) of the other incising cutter of the incising cutters (30),
**characterized in that**
the one blade portion (35) of the pair of blade portions (35,36) includes the linear portion (35C) whereas the other blade portion (36) thereof does not include the same, and the abutting portions (33) of the one incising cutter (31) are eccentrically located toward the other incising cutter (32) with respect to a center of the electric wire (90) in a state in which the abutting portions (33,34) of the pair of incising cutters (30) are abutting each other.

2. The electric wire processing device (1) according to claim 1 further comprising a pair of electric wire clamps (20) arranged adjacent to each of the pair of incising cutters (30) to hold the electric wire (90),
wherein one electric wire clamp (21) of the pair of electric wire clamps (20) adjacent to the one incising cutter (31) includes a concave holding recess (23) arranged to receive the electric wire 90), and the other electric wire clamp (22) of the pair of electric wire clamps (20) includes a pushing portion (25) arranged to push the electric wire (90) to inside of the holding recess (23).

3. A method for cutting an insulating cover (91) of an electric wire (90) along a circumferential direction to strip off the insulating cover (91), the insulating cover (91) having an incision (C) formed along a longitudinal direction of an electric wire (90), the method including,
providing a pair of incising cutters (30) arranged to move closer to and away from each other along a direction intersecting with the longitudinal direction of the electric wire (90) and arranged to cut into the insulating cover (91) along the circumferential direction of the insulating cover (91),
moving the pair of incising cutters (30) closer to each other to abut each other and making a pair of blade portions (35,36)being formed depressed with respect to each other, , wherein abutting portions (33) of the one incising cutter (31) are eccentrically-located toward the other incising cutter (32) with respect to a center of the electric wire (90) so that the linear portion (35C) formed in one blade portion (35) of the pair of the blade portions (35,36) intersects with the incision in the electric wire (90) whereas the other blade portion (36) thereof does not intersects with the same, and
stripping the insulating cover (91) by sequentially cutting the insulating cover (91) along the blade portions (35,36) starting from an intersection of the incision (C) and a linear portion (35C) which is formed in the blade portion (35) of the one incising cutter (31) and extending beyond the incision (C) toward the other incising cutter (32).

4. The method for cutting an insulating cover (91) according to claim 3, wherein the cutting of the insulating cover (91) starts from cutting toward the blade portion (35) of the one incising cutter (31), followed by sequentially cutting the insulating cover (91) along the circumferential direction.

## Patentansprüche

1. Draht-Bearbeitungsvorrichtung (1), die so eingerichtet ist, dass sie eine isolierende Ummantelung (91) eines Drahtes (90) in einer Umfangsrichtung schneidet, um die isolierende Ummantelung (91) zu entfernen, wobei die isolierende Ummantelung (91) einen Einschnitt (C) aufweist, der in einer Längsrichtung des Drahtes (90) ausgebildet ist,
die Draht-Bearbeitungsvorrichtung (1) ein Paar Einschneidemesser (30) umfasst, die so eingerichtet sind, dass sie sich in einer Richtung, die die Längsrichtung des Drahtes (90) kreuzt, näher zueinander und voneinander weg bewegen, und so eingerichtet sind, dass sie in der Umfangsrichtung der isolierenden Ummantelung (91) in die isolierende Ummantelung (91) schneiden,
wobei die paarigen Einschneidemesser (30) Anliegeabschnitte (33, 34), die so eingerichtet sind, dass sie aneinander anliegen, wenn sie näher zueinander bewegt werden, sowie ein Paar Klingenabschnitte (35, 36) enthalten, die in der Umfangsrichtung der isolierenden Ummantelung (91) von den Anliegeabschnitten (33, 34) aus vertieft ausgebildet sind, und ein Klingenabschnitt (35) des Paars von Klingenabschnitten (35, 36) einen linearen Abschnitt (35C) enthält, der sich linear auf die Anliegeabschnitte (33, 34) des anderen Einschneidemessers der Einschneidemesser (30) zu erstreckt,
**dadurch gekennzeichnet, dass**
der eine Klingenabschnitt (35) des Paars von Klingenabschnitten (35, 36) den linearen Abschnitt (35C) enthält, während der andere Klingenabschnitt (36) desselben diesen nicht enthält, und die Anliegeabschnitte (33) des einen Einschneidemessers (31) in einem Zustand, in dem die Anliegeabschnitte (33, 34) der paarigen Einschneidemesser (30) aneinander anliegen, in Bezug auf eine Mitte des Drahtes (90) exzentrisch zu dem anderen Einschneidemesser (32) hin positioniert sind.

2. Draht-Bearbeitungsvorrichtung (1) nach Anspruch 1, die des Weiteren ein Paar Drahtklemmen (20) umfasst, die an jedes der paarigen Einschneidemesser (30) angrenzend angeordnet sind, um den Draht (90) zu halten,
wobei eine Drahtklemme (21) des Paars von Drahtklemmen (20), die an das eine Einschneidemesser (31) angrenzend angeordnet ist, eine konkave Haltevertiefung (23) enthält, die so eingerichtet ist, dass sie den Draht (90) aufnimmt, und die andere Drahtklemme (22) des Paars von Drahtklemmen (20) einen Drückabschnitt (25) enthält, der so eingerichtet ist, dass er den Draht (90) in die Halteaussparung (23) hinein drückt.

3. Verfahren zum Schneiden einer isolierenden Ummantelung (91) eines Drahtes (90) in einer Umfangsrichtung zum Entfernen der isolierenden Ummantelung (91), wobei die isolierende Ummantelung (91) einen Einschnitt (10) aufweist, der in einer Längsrichtung eines Drahtes (90) ausgebildet ist, und das Verfahren einschließt:
Bereitstellen eines Paars Einschneidemesser (30), die so eingerichtet sind, dass sie sich in einer Richtung, die die Längsrichtung des Drahtes (90) kreuzt, näher zueinander und voneinander weg bewegen und so eingerichtet sind, dass sie in der Umfangsrichtung der isolierenden Ummantelung (91) in die isolierende Ummantelung (91) schneiden,
Bewegen der paarigen Einschneidemesser (30) näher zueinander, so dass sie aneinander anliegen, und Ausbilden eines Paars von Klingenabschnitten (35, 36), so dass sie vertieft zueinander sind, wobei Anliegeabschnitte (33) des einen Einschneidemessers (31) in Bezug auf eine Mitte des Drahtes (90) exzentrisch zu dem anderen Einschneidemesser (32) hin positioniert sind, so dass der lineare Abschnitt (35C), der in einem Klingenabschnitt (35) des Paars von Klingenabschnitten (35, 36) ausgebildet ist, den Einschnitt in dem Draht (90) kreuzt, während der andere Klingenabschnitt (36) desselben diesen nicht kreuzt, und
Entfernen der isolierenden Ummantelung (91) durch sequentielles Schneiden der isolierenden Ummantelung (91) an den Klingenabschnitten (35, 36), ausgehend von einem Schnittpunkt des Einschnitts (C) und eines linearen Abschnitts (35C), der in dem Klingenabschnitt (35) des einen Einschneidemessers (31) ausgebildet ist und sich über den Einschnitt (C) hinaus auf das andere Einschneidemesser (32) zu erstreckt.

4. Verfahren zum Schneiden einer isolierenden Ummantelung (91) nach Anspruch 3, wobei das Schneiden der isolierenden Ummantelung (91) damit beginnt, dass auf den Klingenabschnitt (35) des einen Einschneidemessers (31) zu geschnitten wird, und anschließend die isolierende Ummantelung (91) sequentiell in der Umfangsrichtung geschnitten wird.

## Revendications

1. Dispositif de traitement de fil électrique (1) adapté à découper l'enveloppe isolante (91) d'un fil électrique (90) dans la direction circonférentielle pour dénuder l'enveloppe isolante (91), l'enveloppe isolante (91) présentant une incision (C) formée dans la direction longitudinale du fil électrique (90),
le dispositif de traitement de fil électrique (1) comprenant une paire de couteaux d'incision (30) agencés pour se rapprocher l'un de l'autre et pour s'éloigner l'un de l'autre dans une direction coupant la direction longitudinale du fil électrique (90) et agencés pour effectuer une découpe dans l'enveloppe isolante (91) dans la direction circonférentielle de l'enveloppe isolante (91),
dans lequel la paire de couteaux d'incision (30) comporte des parties de butée (33, 34) agencées pour venir en butée l'une contre l'autre lorsqu'on les rapproche l'une de l'autre et une paire de parties de lame (35, 36) formées en retrait par rapport aux parties de butée (33, 34) dans la direction circonférentielle de l'enveloppe isolante (91), et
dans lequel une partie de lame (35) de la paire de parties de lame (35, 36) comporte une partie linéaire (35C) s'étendant linéairement vers les parties de butée (34) de l'autre couteau d'incision des couteaux d'incision (30),
**caractérisé en ce que**
la première partie de lame (35) de la paire de parties de lame (35, 36) comporte la partie linéaire (35C), tandis que son autre partie de lame (36) ne la comporte pas, et les parties de butée (33) du premier couteau d'incision (31) sont disposées de manière excentrée vers l'autre couteau d'incision (32) par rapport au centre du fil électrique (90) dans un état dans lequel les parties de butée (33, 34) de la paire de couteaux d'incision (30) sont en butée l'une contre l'autre.

2. Dispositif de traitement de fil électrique (1) selon la revendication 1, comprenant en outre une paire de pinces de fil électrique (20) agencées de manière adjacente à chaque couteau de la paire de couteaux d'incision (30) pour tenir le fil électrique (90),
dans lequel une pince de fil électrique (21) de la paire de pinces de fil électrique (20) adjacente au premier couteau d'incision (31) comporte une cavité de maintien concave (23) agencée pour recevoir le fil électrique (90) et l'autre pince de fil électrique (22) de la paire de pinces de fil électrique (20) comporte une partie de poussée (25) agencée pour pousser le fil électrique (90) vers l'intérieur de la cavité de maintien (23).

3. Procédé de découpage de l'enveloppe isolante (91) d'un fil électrique (1) dans la direction circonférentielle pour dénuder l'enveloppe isolante (91), l'enveloppe isolante (91) présentant une incision (C) formée dans la direction longitudinale du fil électrique (90), le procédé comportant,
la fourniture d'une paire de couteaux d'incision (30) agencés pour se rapprocher l'un de l'autre et pour s'éloigner l'un de l'autre dans une direction coupant la direction longitudinale du fil électrique (90) et agencés pour effectuer un découpage dans l'enveloppe isolante (91) dans la direction circonférentielle de l'enveloppe isolante (91),
le rapprochement des couteaux de la paire de couteaux d'incision (30) pour venir en butée l'un contre l'autre et la mise en retrait d'une paire de parties de lame (35, 36) l'une par rapport à l'autre, dans lequel les parties de butée (33) du premier couteau d'incision (31) sont disposées de manière excentrée vers l'autre couteau d'incision (32) par rapport au centre du fil électrique (90), de sorte que la partie linéaire (35C) formée dans une partie de lame (35) de la paire de parties de lame (35, 36) coupe l'incision dans le fil électrique (90) tandis que son autre partie de lame (36) ne la coupe pas, et
le dénudage de l'enveloppe isolante (91) par découpage en séquence de l'enveloppe isolante (91) le long des parties de lame (35, 36) en partant de l'intersection de l'incision (C) et d'une partie linéaire (35C) qui est formée dans la partie de lame (35) du premier couteau d'incision (31) et s'étendant au-delà de l'incision (C) vers l'autre couteau d'incision (32).

4. Procédé de découpage d'enveloppe isolante (91) selon la revendication 3, dans lequel le découpage de l'enveloppe isolante (91) commence par le découpage vers la partie de lame (35) du premier couteau d'incision (31) suivi par le découpage en séquence de l'enveloppe isolante (91) dans la direction circonférentielle.
